Europäisches Patentamt

European Patent Office

Office européen des brevets

(19)

(11) Veröffentlichungsnummer : **0 416 227 B1**

# (12) EUROPÄISCHE PATENTSCHRIFT

(45) Veröffentlichungstag der Patentschrift :
**16.12.92 Patentblatt 92/51**

(51) Int. Cl.⁵ : **B60K 20/02,** F16H 59/02,
F16H 63/42

(21) Anmeldenummer : **90111928.9**

(22) Anmeldetag : **23.06.90**

(54) Kraftfahrzeuggetriebe.

(30) Priorität : **02.09.89 DE 3929268**

(43) Veröffentlichungstag der Anmeldung :
**13.03.91 Patentblatt 91/11**

(45) Bekanntmachung des Hinweises auf die
Patenterteilung :
**16.12.92 Patentblatt 92/51**

(84) Benannte Vertragsstaaten :
**DE FR GB IT**

(56) Entgegenhaltungen :
**DE-A- 1 964 524
DE-A- 3 237 509
DE-A- 3 237 517
DE-A- 3 337 930
DE-A- 3 422 262
DE-A- 3 717 675
FR-A- 2 600 285
US-A- 3 985 095**

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Truckenbrodt, Andreas, Dr.
Lichtweg 9
W-8032 Gräfelfing (DE)**
Erfinder : **Stephan, Anton
Brunnenstrasse 44
W-8011 Baldham (DE)**
Erfinder : **Werner, Jürgen
Rotwandweg 5
W-8046 Garching (DE)**
Erfinder : **Welter, Andreas
Landsberger Strasse 115a
W-8000 München 2 (DE)**

## Beschreibung

Die Erfindung bezieht sich auf ein Kraftfahrzeuggetriebe wie es im Oberbegriff des Anspruchs 1 beschrieben ist.

Aus der DE-OS 19 64 524 ist ein Kraftfahrzeuggetriebe bekannt, bei dem die einzelnen Fahrstufen oder Gänge elektronisch gesteuert eingelegt werden. Der Wählhebel bei diesem Getriebe ist mit dem Getriebe selbst nicht mehr mechanisch verbunden, er dient lediglich noch zur Anwahl der gewünschten Gangstufe. Bei seiner Betätigung schließt er elektrische Kontakte, deren Schaltimpulse von einer zentralen Auswerteschaltung verarbeitet und in entsprechende Befehle an die Stellglieder für die Gangschaltung umgewandelt werden.

Das vorbekannte Getriebe läßt sowohl den Automatik- als auch den Handschaltbetrieb zu. Der Wählhebel ist hierfür als Koordinatenschalter ausgelegt und läßt sich damit in zwei zueinander senkrecht stehenden Bewegungsebenen betätigen. Dabei dient die eine Betätigungsebene für das Umschalten von Automatik- auf Handschaltbetrieb, während in der senkrecht dazu stehenden Betätigungsebene sich die Gänge einzeln nacheinander einlegen lassen, unabhängig davon, ob der Automatik- oder der Handschaltbetrieb gewählt ist. Die eingelegte Gangstufe wird am Instrumentenbrett angezeigt.

Auch die DE-OS 37 17 675 zeigt ein Kraftfahrzeuggetriebe, das den Automatik- und Handschaltbetrieb zuläßt. Hierfür sind für einen Wählhebel des Getriebes zwei in etwa parallel zueinander verlaufende Schaltgassen vorgesehen. Die eine Schaltgasse ist dem Automatikbetrieb vorbehalten. In der anderen Schaltgasse lassen sich schrittweise die einzelnen Gänge manuell einlegen.

Die Schaltgassen sind in einer Ganganzeige nachgebildet. Dabei sind die einzelnen Fahrstufen des Automatikbereiches in der üblichen Weise mit P, R, N,D, 3, 2, 1 bezeichnet und mit Lichtpunkten versehen. Entsprechend der eingelegten Fahrstufe leuchtet der ihr zugeordnete Lichtpunkt auf. Durch die dem Lichtpunkt benachbarten Stellungen kann der Fahrer die nächsten Schaltmöglichkeiten erkennen. Für den manuellen Bereich sieht die Ganganzeige ein "+" und ein "-" für Hoch- und Zurückschalten vor. Zusätzlich getrennt von der Ganganzeige erscheint im Handschaltbetrieb der eingelegte Gang in einem Anzeigefeld am Armaturenbrett.

Diese Art der Anzeige eignet sich in erster Linie für derartige Getriebe, bei denen der Wählhebel beim Automatikbetrieb in einer herkömmlichen Schaltgasse geführt ist. Das schnelle Erkennen der sich anbietenden Schaltmöglichkeiten dürfte aber nicht immer einfach sein. Ganz abgesehen von Nachtfahrten, muß der Fahrer immer erst den Lichtpunkt auf der Ganganzeige suchen, um dann feststellen zu können, welche nächste Schaltmöglichkeit gegeben ist. Vor allem für ungeübte Fahrer dürfte dies problematisch sein. Außerdem ist eine Kombination mit einem Koordinatenschalter der vorgenannten Art und mit dieser Art der Ganganzeige nicht ohne weiteres zu bewerkstelligen.

Die DE-OS 32 37 517 offenbart eine Schaltanzeige für eine Gangschaltung. Die Gangschaltung ist dabei als eine manuelle Gangschaltung ausgelegt. Das besondere an dieser Ausführung besteht in einer wechselnden Ganganzeige, das heißt die Ganganzeige zeigt in einem Feld den gerade eingelegten Gang und bietet in einem darüberliegenden und einem darunterliegenden Feld die Herauf- bzw. Herunterschaltungsmöglichkeiten an. Ein Automatikbetrieb für die Gangschaltung ist bei dieser Ausführung nicht vorgesehen.

Aufgabe der Erfindung ist es, ein gattungsgemäßes Kraftfahrzeuggetriebe so weiterzuentwickeln, daß die Auswahl des Wählhebels nicht eingeschränkt ist, und daß der Fahrer bei jeder gewählten Fahrstufe eindeutig und schnell die sich ihm bietenden Schaltmöglichkeiten erkennt.

Die Aufgabe wird erfindungsgemäß gelöst mit dem Kennzeichen des Hauptanspruchs 1. Weitere vorteilhafte Ausgestaltungen der Erfindung ergeben sich aus den Unteransprüchen.

Nach der Erfindung ändert sich wie bei der DE-OS 32 37 517 das Bild der Ganganzeige mit dem Schalten der Gänge. Auf dem Bild erkennt der Fahrer den eingelegten Gang und zugleich auch die Schaltmöglichkeiten, die je nach eingelegter Fahrstufe unterschiedlich sind.

Die Erfindung eignet sich besonders gut für solche Kraftfahrzeuggetriebe, bei denen der Wählhebel nicht mehr mechanisch mit dem Getriebe verbunden ist, sondern lediglich noch als Schaltbefehlsgeber dient. Die Schaltbefehle werden von einer zentralen Auswerteschaltung verarbeitet.

Die Auswerteschaltung steuert dabei die Stellglieder für das Schalten der einzelnen Fahrstufen und auch die Ganganzeige. Dabei kann der Fahrer der Auswertelektronik über die entsprechende Betätigung des Wählhebels mitteilen, ob er Automatik- oder Handschaltbetrieb wünscht. Je nachdem wird sie unterschiedliche Schaltkennlinien berücksichtigen und entsprechend auch die Ganganzeige ansteuern.

Nach der Erfindung läßt sich der Wählhebel entsprechend dem vorbekannten Koordinatenschalter in die Richtungen eines planaren Achsenkreuzes verschieben. Er kann daher, in Fahrtrichtung gesehen, nach vorne und nach hinten, nach links und nach rechts gedrückt werden. Dabei ist er so ausgelegt, daß er nach jeder Betätigung selbsttätig in seine Mittellage zurückkehrt.

Den Betätigungsrichtungen ist die Ganganzeige nachgeformt. Sie ist als Balkenkreuz ausgelegt und weist fünf Anzeigefelder auf. Im Mittelpunkt des Balkenkreuzes zeigt sie die gerade geschaltete Gangstufe an. In den Kreuzarmen sind die einzelnen Schaltmöglichkeiten enthalten. Sofern die Auswerteschaltung für eine Bewegungsrichtung keine Schaltmöglichkeit vorsieht, bleibt dieses Anzeigefeld leer.

Möchte der Fahrer nun von der einen Gangstufe in eine andere angezeigte Gangstufe wechseln, so muß er lediglich den Wählhebel in die von der Ganganzeige angegebene Richtung drücken. Der gewünschte Gang wird eingelegt und erscheint dann selbst im mittleren Anzeigefeld. Die übrigen Felder wechseln entsprechend der jetzt geltenden Schaltmöglichkeiten ihre Anzeige.

In einer vorteilhaften Ausführungsform sind für den Wählhebel zwei in Fahrtrichtung verlaufende, parallel zueinander angeordnete Betätigungsebenen vorgesehen. Hierzu senkrecht verläuft wiederum eine weitere Betätigungsebene. Die zwei parallel verlaufenden Bewegungsrichtungen sind dem Automatik- und dem Handschaltbetrieb zugeordnet. Die senkrecht dazu stehende Betätigungsrichtung erlaubt ein Wechseln des Wählhebels in diese beiden Schaltgassen. Außerdem können in dieser Ebene ausgewählte Fahrstufen wie Parken oder Neutralstellung eingelegt werden. Der Wählhebel kehrt wie bei der vorangegangenen Ausführung selbsttätig in seine Mittelstellung zurück, solange er innerhalb einer Schaltgasse bewegt wird. In den Schaltgassen selbst ist er arretiert.

Die Ganganzeige ist den Schaltgassen nachgebildet. Sie weist zwei parallel zueinander verlaufende Anzeigebalken auf, an deren Außenseite weitere Anzeigefelder vorgesehen sind.

Jeder Anzeigebalken enthält die ihm zugeordneten Fahrstufen in vollständiger Darstellung, also für den Automatikbereich die Fahrstufen P, R, N, D, 3, 2, 1 und für den Handschaltbereich beispielsweise 1, 2, 3, 4, 5 bei einem fünfgängigen Getriebe.

Wird der Wählhebel in einer der Schaltgassen nach vorne oder nach hinten bewegt, wandert der zugehörige Anzeigebalken mit den Gangbezeichnungen mit. Er zeigt den gerade gewählten Gang an, sowie durch seine Stellung zu dem anderen Anzeigebalken und den außenliegenden Anzeigefelder die sich ergebenden Schaltmöglichkeiten.

Es ist dabei vorteilhaft, die eingelegte Gangstufe in der Ganganzeige hell erleuchtet darzustellen, während die Schaltmöglichkeiten in einem etwas gedämpfteren Licht erscheinen. Die übrigen insgesamt vorgesehenen Schaltpositionen können gar nicht oder in noch schwächerem Licht erscheinen.

Für die Ganganzeige eignet sich in vorteilhafter Weise ein Bildschirm, der von der zentralen Schaltelektronik angesteuert wird.

Weitere Vorteile der Erfindung ergeben sich aus der nachfolgenden Beschreibung zweier Ausführungsbeispiele und der dazugehörigen Zeichnung. Es zeigen

Figur 1 schematisch einen Wählhebel auf der Mittelkonsole eines Kraftfahrzeuges,

Figur 2 eine Ganganzeige, wie sie in Figur 1 im vorderen Abschnitt der Mittelkonsole erscheint, in vergrößertem Maßstab,

Figur 3 unterschiedliche Anzeigemöglichkeiten der Ganganzeige nach Figur 2,

Figur 4 eine zweite Ausführung mit einem Wählhebel, der in zwei parallelen und einer dazu senkrecht stehenden Betätigungsebenen verschiebbar ist und

Figur 5 die Ganganzeige nach Figur 4 in unterschiedlichen Anzeigebildern.

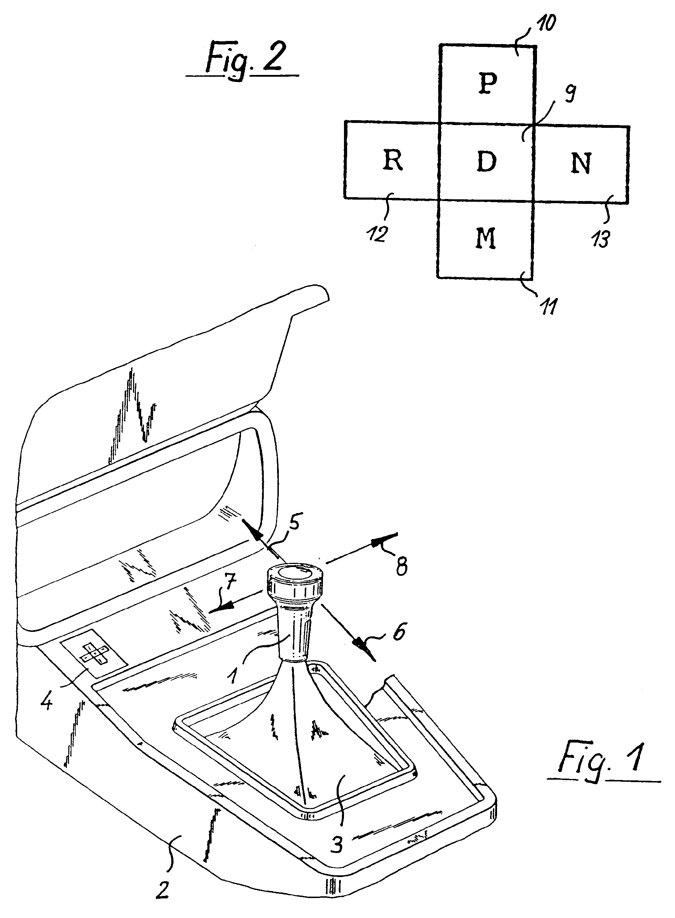

Nach Figur 1 sitzt ein Wählhebel 1 auf einer Mittelkonsole 2 eines nicht weiter dargestellten Kraftfahrzeuges. Der Wählhebel 1 dient zum Einlegen der einzelnen Fahrstufen eines Kraftfahrzeuggetriebes und weist hierfür, durch eine Manschette 3 nicht einsehbar, an seinem unteren Ende elektrische Kontakte auf. Durch Schließen der Kontakte bei Betätigung des Wählhebels 1 werden Schaltbefehle an eine Auswerteschaltung abgegeben. Die Auswerteschaltung ist nicht Gegenstand der Erfindung und daher nicht gezeichnet und nicht näher erläutert. Es sei nur so viel erwähnt, daß sie ohne weiteres von einem Fachmann aufgebaut werden kann und vorzugsweise einen Mikrocomputer enthält. Ihre Aufgabe ist es, einmal die Stellglieder für das ebenfalls nicht dargestellte Fahrzeuggetriebe anzusteuern. Zum anderen bestimmt sie das Anzeigebild einer Ganganzeige 4.

Der Wählhebel 1 läßt sich in zwei zueinander senkrecht angeordnete Betätigungsebenen verschieben. Es ergeben sich dabei vier Richtungen, die in Figur 1 mit entsprechenden Pfeilen gekennzeichnet sind. Der Betätigungspfeil in Fahrtrichtung trägt dabei die Bezugsziffer 5, der gegen die Fahrtrichtung die Bezugsziffer 6, während die Pfeile nach links und nach rechts mit 7 und 8 bezeichnet sind.

Die erwähnte Ganganzeige 4 befindet sich ebenfalls auf der Mittelkonsole 2, allerdings in Richtung Armaturenbrett gerückt. Auf diese Weise ist sie vom Fahrer gut einsehbar. Das Anzeigebild der Ganganzeige 4 ist den Bewegungsrichtungen entsprechend der Pfeile 5 bis 7 nachgebildet.

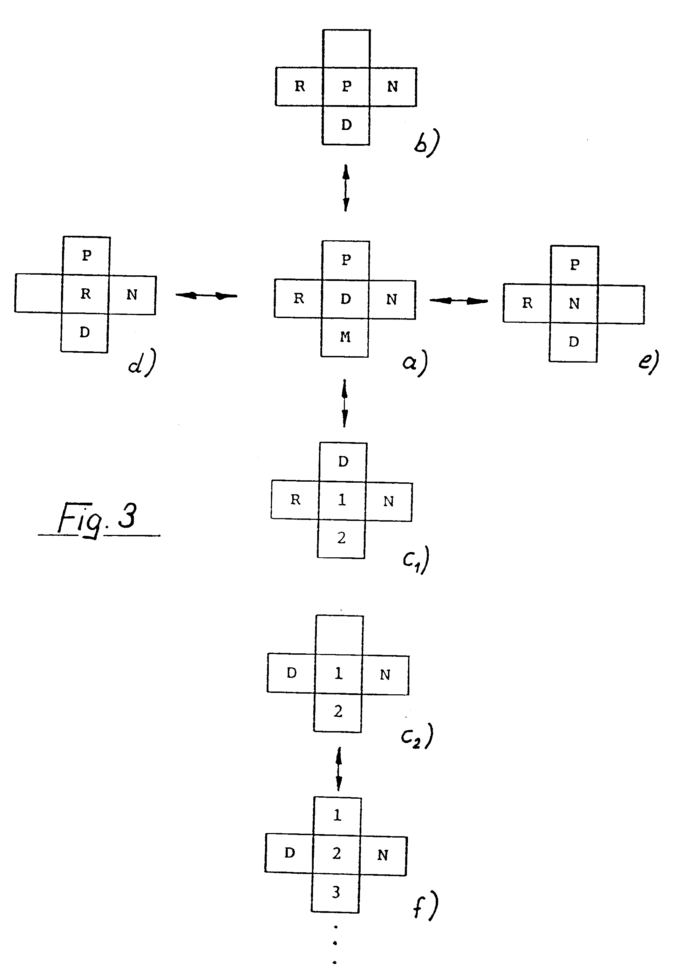

Wie in Figur 2 gut erkennbar, ist sie als Balkenkreuz mit fünf Anzeigefeldern ausgelegt. Das zentrale Anzeigefeld 9 im Mittelpunkt des Balkenkreuzes zeigt die momentan gewählte Gangstufe an. Um dieses zentrale Anzeigefeld 9 gruppieren sich in den Kreuzarmen die Anzeigefelder 10, 11, 12 und 13. Sie entsprechen den Betätigungsrichtungen des Wählhebels 1 nach den Pfeilen 5, 6, 7 und 8 und geben die Schaltmöglichkeiten in Bezug auf die gewählte Fahrstufe an.

Wie das Anzeigefeld 9 nach Figur 2 zeigt, ist in dem dargestellten Fall die Fahrstufe "D" eingelegt. Das heißt, das Getriebe befindet sich im Automatikbetrieb. Die übrigen Anzeigefelder zeigen dem Fahrer an, welche Fahrstufen er nun wählen könnte. Links im Anzeigefeld 12 erscheint "R" für den Rückwärtsgang. Der Fahrer müßte in diesem Fall den Wählhebel 1 in Richtung des Pfeiles 7 drücken. Entsprechendes gilt für die anderen Fahrstufen. Dabei steht "P" für Parkstellung, "N" für Neutral und "M" für manuellen Betrieb.

In Figur 3 sind verschiedene Anzeigebilder dargestellt. Die Doppelpfeile sollen anzeigen, daß in die einzelnen Anzeigebilder hin- und zurückgewechselt werden kann. Es ist unter a) wieder das Anzeigebild entsprechend der Figur 2 ersichtlich. Entsprechend dem Doppelpfeil ist es nach oben in das Anzeigebild b) überführbar. Dies bedeutet eine Wählhebelbewegung entsprechend dem Pfeil 5 nach Figur 1.

Sofern der Fahrer den Wählhebel 1 in diese Richtung gedrückt hat, wird die Parkstufe "P" eingelegt und in der Ganganzeige erscheint das Anzeigebild b). In seinem Zentralfeld steht nun "P". Aus dieser Stellung könnte der Fahrer in die Fahrstufen "R", "N" oder - zurück in das Anzeigebild a) - "D" wechseln. Schaltet er nach "R" im Anzeigebild b), erscheint das Anzeigebild d) mit wiederum "R" im Zentralfeld. Im gleichen Maße erscheint das Anzeigebild e), wenn er in die Position "N" wechselt. Die gleichen Anzeigebilder erscheinen aber auch, wenn er die Schaltbewegungen gemäß Anzeigebild a) entsprechend ausführt.

Möchte der Fahrer vom Automatikbetrieb in den Handschaltbetrieb überwechseln, so kann er im Anzeigebild a) die untere Position "M" wählen. Dies bedeutet nach Figur 1 demnach eine Schaltbewegung entgegen der Fahrtrichtung in Richtung des Pfeiles 6. Es erscheinen entweder die Anzeigebilder c1), c2) oder f), abhängig vom jeweiligen Fahrzustand das Fahrzeuges. Befindet sich das Fahrzeug im Stillstand oder bewegt sich nur mit geringer Geschwindigkeit z. B. mit weniger als 3 km/h, so erscheint das Bild c1). In diesem Bild ist neben der Möglichkeit des Zürückschaltens in die Fahrstufe "D" auch die Möglichkeit gegeben, den Rückwärtsgang entsprechend "R" einzulegen.

Fährt das Fahrzeug beim Wechseln in das manuelle Schaltprogramm bereits mit einer Geschwindigkeit größer als 3 km/h, erscheint je nach Geschwindigkeit und Motordrehzahl entweder c2) oder bei höherer Geschwindigkeit f). Bei noch höherer Geschwindigkeit können sich je nach Auslegung des Getriebes weitere Schaltbilder für den dritten, vierten und fünften Gang einstellen. In Figur 3 sind sie durch Punkte angedeutet. Die Motordrehzahl und die Geschwindigkeit des Fahrzeuges wird ebenfalls von der Auswerteschaltung berücksichtigt.

Befindet sich das Getriebe nun im Handschaltbetrieb, kann der Fahrer schrittweise die einzelnen Gänge nacheinander hochschalten bzw. runterschalten. In den Anzeigebildern c1), c2) und f) ist deutlich erkennbar, daß jederzeit in den Automatikbetrieb zurückgeschaltet werden kann bzw. der Wählhebel 1 in die Neutralstellung "N" überführbar ist.

Wird im manuellen Schaltbetrieb beispielsweise aus dem nicht dargestellten vierten Gang in die Neutralstellung geschaltet, verlangsamt sich das Fahrzeug und entsprechend wechselt die Auswerteschaltung auf der Ganganzeige die entsprechenden Schaltbilder mit abnehmender Geschwindigkeit und ohne Betätigung des Wählhebels 1.

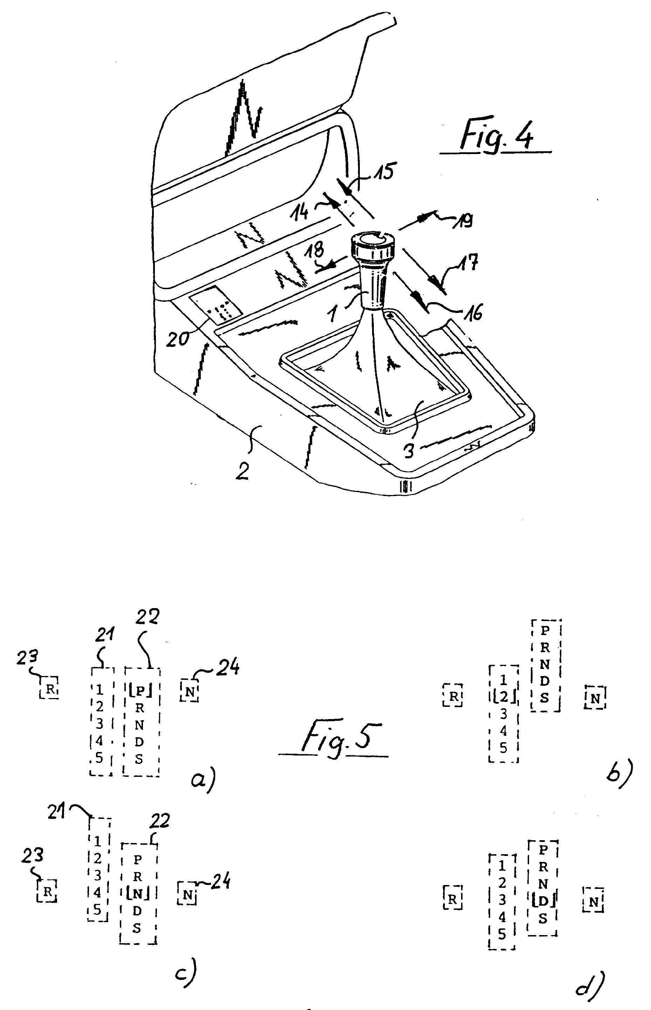

In Figur 4 ist eine zweite Ausführung der Erfindung dargestellt. Es ist wiederum der Wählhebel 1 auf der Mittelkonsole 2 erkennbar. Im Unterschied zum vorhergehenden Ausführungsbeispiel sind jedoch zwei parallele Betätigungsebenen in Fahrzeuglängsrichtung gegeben. Daraus sind vier Betätigungsrichtungen entsprechend der Pfeile 14 bis 17 möglich. Außerdem ist wieder eine senkrecht dazu stehende Betätigungsebene vorhanden, gekennzeichnet durch die Richtungspfeile 18 und 19. Der Wählhebel 1 ist nach Figur 4 so ausgelegt, daß er bei Betätigungen in Fahrzeuglängsrichtung also vor und zurück jeweils in seine Ausgangslage zurückkehrt. Das gleiche gilt für die Betätigung in Richtung des Pfeiles 19. Der Wählhebel ist jedoch in beiden Betätigungsebenen in Fahrzeuglängsrichtung und ebenso bei einer Betätigung in Richtung des Pfeiles 18 arretiert.

Entsprechend dem vorhergehenden Ausführungsbeispiel befindet sich eine Ganganzeige 20 auf der Konsole 2. In Figur 5 erscheinen die verschiedenen Anzeigebilder dieser Ganganzeige 20. Die Anzeigebilder selbst sind wieder mit a) bis e) bezeichnet.

Wie Figur 5 zeigt, besteht die Ganganzeige 20 aus zwei parallel zueinander ausgerichteten Anzeigebändern 21, 22 mit der vollständigen Bezeichnung aller möglichen Wählstufen. Dabei ist das linke Anzeigeband 21 dem Handschaltbetrieb zugeordnet und entspricht den Betätigungsrichtungen der Pfeile 14 und 16. Das rechte Anzeigeband 22 stellt den Automatikbetrieb dar. Ihm sind die Pfeile 15 und 17 zugeordnet. Neben den beiden Anzeigebändern erscheinen auf der Ganganzeige jeweils noch zwei Einzelfelder 23 und 24 für die Wählstufen "N" und "R".

Steht nun der Wählhebel 1 in der Betätigungsebene, die durch die Pfeile 15, 17 repräsentiert wird und ist die Parkstellung eingeschaltet, so erscheint dies auf dem rechten Anzeigeband 22 nach Anzeigebild a) in Figur 5. Der Fahrer hat nun wieder die Möglichkeit entweder nach "R" runterzuschalten, indem er den Wählhebel 1 nach Figur 4 in Richtung des Pfeiles 17 drückt. Er kann aber auch nach rechts entsprechend dem Pfeil 19 in Figur 4 nach "N" ins Feld 24 wechseln. Ebenso kann er die Schaltgasse für den Automatikbetrieb verlassen und in den manuellen Betrieb nach "1" des Anzeigebandes 21 überwechseln. Von dort kann er wiederum in den "R" Bereich entsprechend dem Anzeigefeld 23 weiterschalten.

Je nach Wahl erscheinen die unterschiedlichen bilder, von denen lediglich die Bilder b), c) und d) eine Auswahl darstellen. Um beispielsweise in das Bild c) zu gelangen, mußte der Fahrer zunächst einmal in die Fahrstufe "D" schalten, sodann in dieser Fahrstufe den Wagen beschleunigen bis automatisch der vierte Gang im Getriebe eingelegt wird. Sodann könnte er in die Fahrstufe "N" wechseln.

Wie das Anzeigebild c) zeigt, haben sich in diesem Fall die Anzeigebalken 21 und 22 verschoben und zwar gegeneinander und gegenüber den feststehenden Anzeigefeldern 23 und 24. Entsprechendes gilt für die Anzeigebilder c) und d). Um dieses Verschieben der Anzeigebalken zu realisieren, ist die Ganganzeige 20 als Bildschirm ausgelegt, der von der Auswertelektronik angesteuert wird.

Zusammenfassend läßt sich für dieses Ausführungsbeispiel wiederum sagen, daß das Anzeigebild den Betätigungsrichtungen des Wählhebels 1 entspricht und für den Fahrer weitgehend selbsterklärend ist. Er kann in dem jeweiligen Anzeigebild eindeutig erkennen, in welche Richtungen er den Wählhebel 1 bewegen muß, um die gewünschte Fahrstufe zu erhalten.

Es liegt auf der Hand, daß die Ganganzeige an jedem geeigneten Ort im Fahrzeug vorgesehen sein kann, so zum Beispiel auch als weiteres Instrument im Armaturenbrett. Das gleiche gilt für den Schalthebel.

**Patentansprüche**

1. Kraftfahrzeuggetriebe mit einem Wählhebel (1) zum Einlegen der einzelnen Fahrstufen und mit einer getrennt vom Wählhebel angeordneten Ganganzeige (4), die die jeweils gewählte Fahrstufe und die daraus sich ergebenden Schaltmöglichkeiten in andere Fahrstufen abbildet, wobei sich das Bild der Ganganzeige (4) in Abhängigkeit der gewählten Fahrstufe ändert, dadurch gekennzeichnet, daß der Wählhebel (1) in die Richtungen eines Achsenkreuzes verschiebbar ist und in seine Ausgangsstellung selbsttätig zurückkehrt und daß die Ganganzeige (4) als Balkenkreuz ausgelegt ist, in dessen Mittelpunkt die jeweils eingelegte Gangstufe und in den Kreuzarmen die Schaltmöglichkeiten angezeigt sind.

2. Kraftfahrzeuggetriebe nach Anspruch 1, bei dem der Wählhebel in zwei etwa in Fahrzeuglängsrichtung verlaufenden parallelen Betätigungsebenen und hierzu in etwa rechtwinklig bewegbar ist, dadurch gekennzeichnet, daß die Ganganzeige (20) zwei parallel zueinander ausgerichtete, beim Wechsel der Fahrstufe mit der Betätigung des Wählhebels (1) wandernde Anzeigebalken (21, 22) aufweist, an deren Außenseiten weitere Anzeigefelder (23, 24) vorgesehen sind.

3. Kraftfahrzeuggetriebe nach Anspruch 2, bei dem im Bild der Ganganzeige alle zur Verfügung stehenden Fahrstufen in Form von ansteuerbaren Leuchtpunkten angezeigt sind, dadurch gekennzeichnet, daß auf der Ganganzeige (20) die gewählte Fahrstufe und die sich daraus ergebenden Wahlmöglichkeiten heller gegenüber den übrigen Schaltstufen erscheinen.

4. Kraftfahrzeuggetriebe nach Anspruch 3, dadurch gekennzeichnet, daß die eingelegte Fahrstufe heller in der Ganganzeige erscheint als die wählbaren Fahrstufen.

5. Kraftfahrzeuggetriebe nach einem der Ansprüche 2 bis 4, dadurch gekennzeichnet, daß der Wählhebel (1) in seinen parallelen Betätigungsebenen nach einer Betätigung in die Ausgangslage zurückkehrt und in seiner senkrecht dazu stehenden Betätigungsebene in wenigstens einer Position arretierbar ist.

6. Kraftfahrzeuggetriebe nach einem der Ansprüche 1 bis 5, dadurch gekennzeichnet, daß die Ganganzeige als Bildschirm ausgelegt ist.

7. Verwendung eines Wählhebels und einer Ganganzeige für ein Kraftfahrzeuggetriebe nach einem der Ansprüche 1 bis 6, das über den Wählhebel (1) als selbsttätig schaltendes Automatikgetriebe und als Handschaltgetriebe benutzbar ist.

**Claims**

1. A motor vehicle transmission comprising a selector lever (1) for engaging the individual gears and also comprising a gear display (4) disposed separately from the selector lever and forming an image of each selected gear and the resulting possibilities of shifting to other gears, the image on the gear display (4) altering in dependence on the chosen gear, characterised in that the selector lever (1) is movable in the directions of a coordinate system and automatically returns to its starting position, and the gear display (4) is in the form of crossed bars, the chosen gear being shown at the centre and the possible changes being shown in the arms of the cross.

2. A transmission according to claim 1, in which the selector lever is movable in two parallel actuating planes extending approximately in the longitudinal direction of the vehicle and is also movable at right angles thereto, characterised in that the gear display (20) comprises two parallel bars (21, 22) which move with the actuation of the selector lever (1) during a change of gear, additional display panels (23, 24) being provided outside the panels.

3. A transmission according to claim 2, in which all the gears available in the gear-display image are shown in the form of controllable light spots, characterised in that, on the gear display (20), the chosen gear and the resulting possible changes are shown more brightly than the other gears.

4. A transmission according to claim 3, characterised in that, in the gear display, the engaged gear appears more brightly than the selectable gears.

5. A transmission according to any of claims 2 to 4,characterised in that, in its parallel actuating planes, the selector lever (1) returns to the starting position after actuation, whereas in the plane at right angles thereto, it is lockable in at least one position.

6. A transmission according to any of claims 1 to 5, characterised in that the gear display is in the form of a display screen.

7. Use of a selector lever and a gear display for a motor vehicle transmission according to any of claims 1 to 6, the system being of use either as an automatic gear-shifting system or as a manual system, by using the selector lever (1).

**Revendications**

1. Boîte de vitesses de véhicule comportant un levier sélecteur (1) pour passer les différents rapports ainsi qu'un affichage de rapport (4) monté distinct du levier sélecteur, cet affichage indiquant le rapport de vitesse respectivement choisi et les possibilités de commutation qui en découlent vers les autres rapports, l'image de l'affichage du rapport (4) changeant en fonction du rapport choisi, boîte de vitesses caractérisée en ce que le levier sélecteur (1) peut coulisser dans les directions d'une intersection d'axes et revient automatiquement dans sa position de départ et en ce que l'affichage de rapport (4) est en forme de croix dont le centre affiche chaque fois le rapport qui a été passé et dont les bras en croix indiquent les possibilités de passage de rapport.

2. Boîte de vitesses selon la revendication 1, dont le levier sélecteur peut être déplacé dans deux plans de manoeuvre sensiblement parallèles à la direction longitudinale du véhicule, et mobiles perpendiculairement à ces plans, boîte de vitesses caractérisée en ce que l'affichage de rapport (20) se fait dans deux barres d'affichage (21, 22), alignées parallèlement l'une par rapport à l'autre, et qui changent d'affichage lors du changement de rapport par l'actionnement du levier sélecteur (1) et dont les côtés extérieurs comportent d'autres champs d'affichage (23, 24).

3. Boîte de vitesses de véhicule selon la revendication 2, dont l'image de l'affichage du rapport indique tous les rapports de vitesse disponibles sous la forme de points lumineux commandés, boîte de vitesses caractérisée en ce que sur l'affichage du rapport (20) apparaît le rapport de vitesse choisi et les possibilités de sélection qui en résultent, apparaissent plus clairement que les autres rapports de vitesse.

4. Boîte de vitesses de véhicule selon la revendication 3, caractérisée en ce que l'étage de vitesse passé apparaît en plus clair dans l'affichage des rapports que les rapports susceptibles d'être choisis.

5. Boîte de vitesses selon l'une des revendications 2 à 4, caractérisée en ce que le levier sélecteur (1) revient dans la position de départ après actionnement dans ses plans de manoeuvre parallèles et se bloque dans son plan de manoeuvre pratiquement perpendiculaire, dans au moins une position.

6. Boîte de vitesses de véhicule selon l'une des revendications 1 à 5, caractérisée en ce que l'affichage du rapport se fait sous la forme d'un écran image.

7. Utilisation d'un levier sélecteur et d'un affichage de rapport de vitesse pour une boîte de vitesses de véhicule selon l'une des revendications 1 à 6, qui s'utilise comme levier sélecteur de boîte de vitesses automatique et de boîte à commande manuelle.

*Fig. 2*

| | P | |
|---|---|---|
| R | D | N |
| | M | |

*Fig. 1*

Fig. 3

*Fig. 4*

*Fig. 5*